# EUROPEAN PATENT APPLICATION

(11) **EP 1 376 318 A1**
(43) Date of publication of application: **02.01.2004**
(21) Application number: 02013328.6
(22) Date of filing: 18.06.2002
(51) Int. Cl.: G06F 3/02, H01H 13/70

(54) **Force sensitive key and keyboard arrangement**

(71) Applicant: Zngf, Frank, Taichung (TW)
(72) Inventor: Zngf, Frank, Taichung (TW)
(74) Representative: Leson, Thomas Johannes Alois, Dipl.-Ing.

(57) **Abstract**

A force sensitive key and keyboard arrangement for computers includes ten multidirectional keys which are used for enabling ten-finger typing by applying forces and no finger movement among keys is needed. Each multidirectional key capable of nine functions comprises a force sensor. The force applied by a finger tip is sensed and classified as one of either of eight directions on the horizontal plane or a pressing direction, the activated direction is then designated to a key function. Functions in the same column are discriminated by sensing different longitudinal forces. Discrimination of functions between columns and higher rows operated by the same finger is achieved through applying lateral forces. The ten multidirectional keys represent all of the functions of a standard computer keyboard.

## Description

### FIELD OF THE INVENTION

The present invention relates to a key and keyboard arrangement of a computer, personal digital assistant, mobile phone and the like electronic apparatuses, and more particularly to multidirectional keys with multiple functions used as keys in an alphanumeric input device for a word processor.

### BACKGROUND OF THE INVENTION

A conventional QWERTY format keyboard for a computer includes a plurality of keys which are arranged on the keyboard in a specific format such that the user's ten fingers touch specific keys. The conventional QWERTY keyboard, with over seventy keys each for a specific function item, is bulky and is not convenient to be carried. Besides, in order to achieve moderate typing speed, it takes long time to practice so that the user is able to move his/her fingers quickly enough among keys and a specific finger can be placed on the right position for a correct key-in stroke. Some previous work shows the efforts to minimize the number of keys for a keyboard. One of those efforts, U.S. Pat. No. 5841,374 discloses a minimum size of a keyboard with nineteen multifunctional keys and each key includes up to seven functions. However, the user still has to move six of his/her ten fingers among the keys to operate the keyboard.

Thus, there is a need to improve the maneuverability for rapid data entry by providing a force direction sensitive key and keyboard arrangement with which all of the user's ten fingers maintain in contact with their corresponding keys at all time while manipulating the keyboard. Another need is to reduce the size of the keyboard while retaining all of the functions of the standard computer keyboard with each function activated with a single action stroke, i.e., without the use of mapping or multi-action combinations. Both needs push forward to the use of multidirectional keys each equipped with nine function items and to limit the number of keys of a keyboard to ten.

### SUMMARY OF THE INVENTION

In accordance with one aspect of the present invention, there provides a combination of force sensitive keys and keyboard arrangement for a word processor, wherein the keyboard includes a plurality of multidirectional keys and each multidirectional key includes a force sensor and a vector classifier. The force sensor detects the force vector applied by the finger tip on its corresponding multidirectional key. The vector is then classified according to predefined direction ranges and is designated as one of the nine functions. The nine functions in each key appear to be in a pattern of three rows by three columns.

The primary object of the present invention is to provide a force sensitive key and keyboard arrangement that has only ten keys each controlled by a designated finger of the user and performs all the functions that a QWERTY keyboard provides.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 shows the system schematic view of the embodiment of the keyboard arrangement with a computer;
Fig. 2 shows nine functions on a single multidirectional key;
Fig. 3 shows the directions that a user's finger tip applies on the key; and
Fig. 4 shows the arrangement of the function items on the keys of the keyboard of this invention.

### DETAILED DESCRIPTION OF THE PREFERRED EMBODIMENT

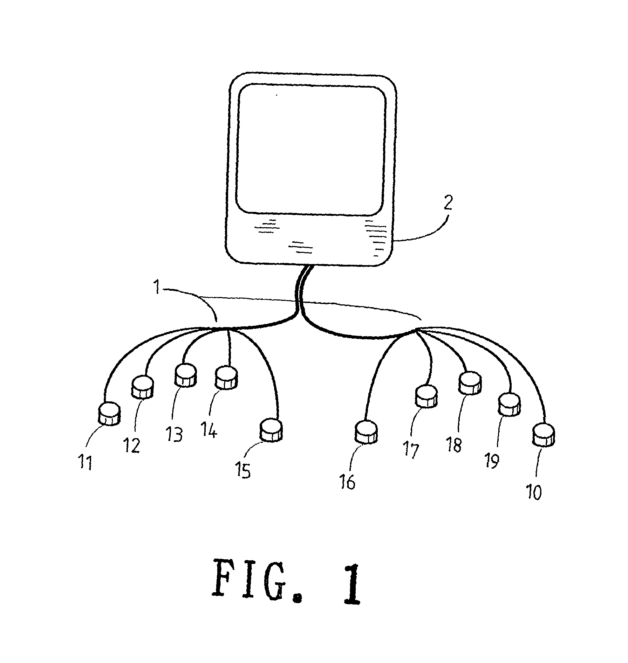

Referring to Fig. 1, the system of the present invention comprises a computer 2 and a keyboard 1 which has ten multidirectional keys 11, 12, 13, 14, 15, 16, 17, 18, 19 and 10. Each multidirectional key has a three-axial force sensor so as to detect the vector of a force that a user's finger tip applies to the key. The vector of the force is then classified as one of the nine classes according to direction ranges. The chosen class represents a specific function which inputs a specific code into the computer.

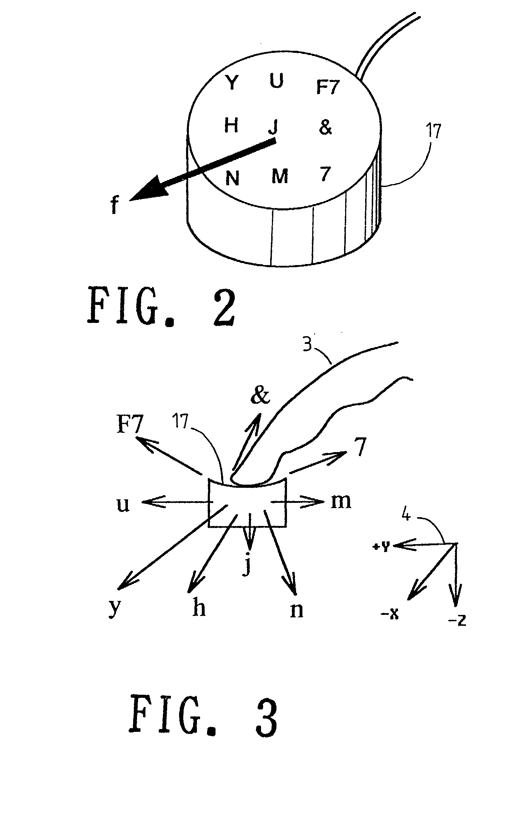

Referring to Fig. 2, a multidirectional key 17 includes nine function items which are shown as a matrix pattern in three columns by three rows. Taking the multidirectional key operated by the index finger of right hand as an example, the way that the finger tip operates the multidirectional key is shown in Fig. 3 and the force sensor 17 of the multidirectional key measures the force vector f as the arrow shown in Fig. 2. The force vector f is then sent to a processing unit of the computer and is classified according to the predefined direction ranges. When the value of the force vector f reaches a threshold value on either one of the nine directions, a specific function is activated according to the classification result. The nine directions as shown in Fig. 3 include eight directions parallel to the horizontal plane or the plane of the key surface, forward (u), backward (m), front-left (y), left (h), back-left (n), front-right (F7), right (*&*) and back-right (7), and a direction of downward pressing (j).

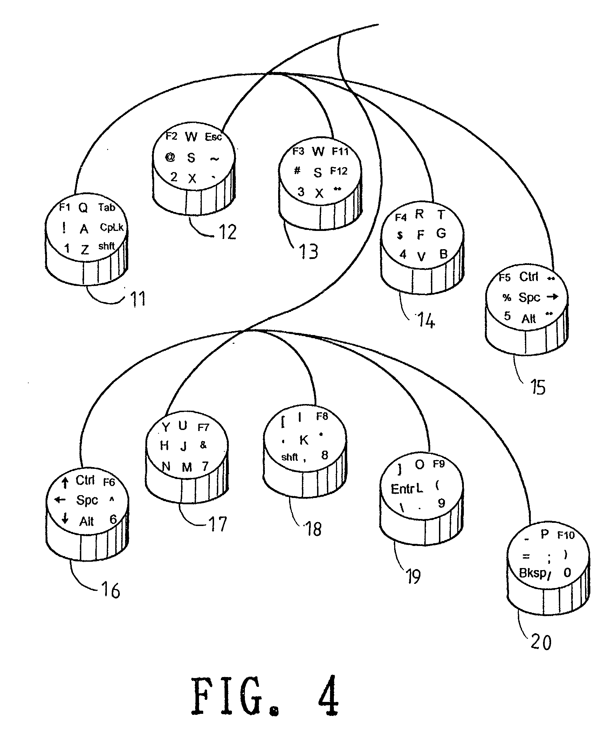

As shown in Fig. 4, there are ten multidirectional keys, 11, 12, 13, 14, 15, 16, 17, 18, 19, and 10, which constitute keyboard functions mapping to all of the functions of a QWERTY keyboard. The ten keys, 11, 12, 13, 14, 15, 16, 17, 18, 19, and 10, are thus allocated with appropriate distances apart from one another, and can be placed on and operated ergonomically, respectively, by the little finger of left hand, the left ring finger, the left middle finger, the left index finger, the left thumb, the right thumb, the right index finger, the right middle finger, the right ring finger, and the right little finger. The function items located in the same column of a QWERTY keyboard can be discriminated by sensing the directions of the longitudinal forces applied on the key of the keyboard of the present invention. A longitudinal force can be a forward direction and backward direction as shown along the Y-axis of the coordinate system 4 in Fig. 3. Figs. 2 and 4 show the discrimination of different rows in the same column such as the discrimination among U, J, and M, or the discrimination among Y, H, and N.

The function items of different columns on the same multidirectional key, corresponding to keys in a QWERTY keyboard located at different columns and the higher rows beyond those keys operated in normal hand positions, are distinguished by sensing the differences of the lateral forces applied on a multidirectional key. Corresponding to the keys with the three letters Y, H, and N on the QWERTY keyboard, typing on which requires to move the finger laterally, items of Y, H, and N on the multidirectional key 17 can be detected by sensing inward lateral forces applied on the multidirectional key 17 so as to be distinguished from U, J, and M on the same multidirectional key 17. The inward lateral forces can be exerted by pushing fingers of the left hand to the right, and the right hand to the left. The index finger of right hand, the index finger of the left hand, the little finger of right hand and the little finger of left hand move laterally when operating the QWERTY keyboard, so that those items on multidirectional keys are designed to have the feature of sensing inward lateral forces. The little finger of the right hand has to move laterally over more than one columns when operating on the QWERTY keyboard, so that those columns sensing inward force are distributed on to three keys operated by the middle finger 18 of right hand, the ring finger 19 of right hand, and the little finger 10 of right hand.

The keys on the QWERTY keyboard operated by moving hands upward are designated as the keys of higher rows and which include the numeral keys, symbol keys and function keys. The discrimination of the normal keys and the three types of keys as mentioned above are made by sensing outward lateral forces applied on the multidirectional keys. "7", "&" and "F7" on the multidirectional key 17 are discriminated, respectively, from "U", "J" and "M" by sensing the outward lateral forces applied to the key. Therefore, from the left to the right, i.e., from the little finger of left hand to the little finger of right hand, (1, !, F1), (2, @, F2),....(9, (, F9) and (0, ), F10) arranged in the outer columns of the corresponding keys, respectively.

The function items located at middle column of the three columns of a multidirectional key correspond to those keys on the QWERTY keyboard that are activated without lateral moves of fingers. The function items located at an inner column of the three columns of a multidirectional key correspond to those keys on the QWERTY keyboard that are activated by moving the fingers laterally. The function items located at an outer column of the three columns of a multidirectional key correspond to those keys on the QWERTY keyboard that are activated requiring to move the fingers along with their hand upward. The function items located at a first row of the three rows correspond to those keys on the QWERTY keyboard that are activated by moving the fingers forward. The function items located at a middle row of the three rows correspond to those keys on the QWERTY keyboard that are activated without movement of the fingers. The function items located at a third row of the three rows correspond to those keys on the QWERTY keyboard that are activated by moving the fingers backward.

The ten separated multidirectional keys 11, 12, 13, 14, 15, 16, 17, 18, 19, and 10 are ergonomically arranged such that the keys may be operated dexterously with the ten fingers of a user. The multidirectional keys may also be retained by frames or mounted on the finger tips. The keyboard can also be made to be foldable so that it is convenient to be carried or stored.

While we have shown and described the embodiment in accordance with the present invention, it should be clear to those skilled in the art that further embodiments may be made without departing from the scope of the present invention.

A force sensitive key and keyboard arrangement for computers includes ten multidirectional keys which are used for enabling ten-finger typing by applying forces and no finger movement among keys is needed. Each multidirectional key capable of nine functions comprises a force sensor. The force applied by a finger tip is sensed and classified as one of either of eight directions on the horizontal plane or a pressing direction, the activated direction is then designated to a key function. Functions in the same column are discriminated by sensing different longitudinal forces. Discrimination of functions between columns and higher rows operated by the same finger is achieved through applying lateral forces. The ten multidirectional keys represent all of the functions of a standard computer keyboard.

## Claims

1. A combination of force sensitive keys and keyboard arrangement for a word processor, comprising:
a keyboard adapted to be connected with a computer and having a plurality of multidirectional keys, each multidirectional key having a sensor which is adapted to detect the direction falling within one of the multiple direction ranges for the force applied by a finger tip on the key to select and activate a function.

2. A combination of force sensitive keys and keyboard arrangement for a word processor, comprising:
a keyboard adapted to be connected with a computer and having a plurality of multidirectional keys, each multidirectional key having a force sensor and a vector classification unit, the force sensor adapted to measure the force vector applied by a finger tip and the vector classification unit adapted to categorize the force vector to discriminate different functions in a key.

3. The combination as claimed in claim 2, wherein the multidirectional keys each includes a vector classification unit which is a program used to classify a force vector into either of eight horizontal directions or a pressing direction.

4. A combination of force sensitive keys and keyboard arrangement for a word processor, comprising:
a keyboard adapted to be connected with a computer and having ten multidirectional keys which are adapted to be arranged with respect to the ten fingers of a user.

5. The combination as claimed in claim 4, wherein each multidirectional key includes items in a matrix pattern of three rows by three columns so as to have nine function items.

6. The combination as claimed in claim 5, wherein the function items located at middle column of the three columns are adapted to be activated for those keys in a QWERTY keyboard while operated without lateral movement of fingers.

7. The combination as claimed in claim 5, wherein the function items located at an inner column of the three columns are adapted to be activated for those keys in a QWERTY keyboard while operated with lateral movement of fingers.

8. The combination as claimed in claim 5, wherein the function items located at an outer column of the three columns are adapted to be activated for those keys in a QWERTY keyboard while operated with upward movement of fingers along with their hand.

9. The combination as claimed in claim 5, wherein the function items located at a first row of the three rows are adapted to be activated for those keys in a QWERTY keyboard while operated with forward movement of fingers.

10. The combination as claimed in claim 5, wherein the function items located at a second row of the three rows are adapted to be activated for those keys in a QWERTY keyboard while operated without movement of fingers.

11. The combination as claimed in claim 5, wherein the function items located at a third row of the three rows are adapted to be activated for those keys in a QWERTY keyboard while operated with backward movement of fingers.
